# EUROPEAN PATENT APPLICATION

(11) **EP 2 886 900 A1**
(43) Date of publication of application: **24.06.2015**
(21) Application number: 13831522.1
(22) Date of filing: 24.07.2013
(51) Int. Cl.: F16D 41/06

(54) **ROLLER CLUTCH EQUIPPED WITH SUPPORT BEARING**

(30) Priority: 20.08.2012 JP 2012181342
(71) Applicant: NSK Ltd., Tokyo 141-8560 (JP)
(72) Inventor: MORI,Hirofumi, Fujisawa-shi Kanagawa 251-8501 (JP); KOBAYASHI, Kazuto, Fujisawa-shi Kanagawa 251-8501 (JP)
(74) Representative: Cabinet Morelle & Bardou SC
(86) International application number: PCT/JP2013/070113
(87) International publication number: WO 2014/030484

(57) **Abstract**

Provided is a low-cost roller clutch equipped with support bearings having excellent transmission performance and durability and for which it is possible to surely prevent interference between component members. Of the component members of a roller clutch 10b, a first support bearing 29 and second support bearing 30, an outer-ring member 27 is common. A first race member 33, which functions as the inner ring of the first support bearing 29, and a clutch inner-ring member 28 are a single body. The clutch inner-ring member 28 and a second race member 34 of the second support bearing 30 are separate bodies. A clutch retainer 15b is held between the back-end sections of concave sections 19 of a cam surface 18 and the end edge of the second race member 34, and displacement in the axial direction of the clutch retainer 15b is suppressed. As a result, the clutch retainer 15b is prevented from hindering the rotation of the first support bearing 29 and second support bearing 30.

## Description

### TECHNICAL FIELD

The present invention relates to a roller clutch equipped with support bearings that is assembled in various auxiliary machines of an automobile such as the starter of an idling-stop vehicle, alternator and the like, or assembled in the power transmission section of various kinds of machinery such as a transmission oil pump and the like.

### BACKGROUND ART

FIG. 10 illustrates an example of a starter for an idling-stop vehicle that is disclosed in JP 2004-144170 (A). In this starter, a continuous belt 7 spans between a follower pulley 3 that is fastened to the end of the crankshaft 2 of the engine 1, and a drive pulley 6 that is fastened to the end of the rotating drive shaft 5 of the starter motor 4. This starter is equipped with a one-way clutch, and is such that power is transmitted from the rotating drive shaft 5 to the continuous belt 7; however, power is not transmitted from the continuous belt 7 to the rotating drive shaft 5.

In this kind of starter, when starting the engine, electricity flows to the starter motor 4, the drive pulley 6 rotates and drives, and by way of the continuous belt 7 and follower pulley 3, rotates and drives the crankshaft 2. When doing this, the one-way clutch that is provided in the drive pulley 6 is engaged and is in a locked state, so power is transmitted from the rotating drive shaft 5 to the continuous belt 7. On the other hand, after the engine has started, the one-way clutch that is provided in the drive pulley 6 is disengaged and is in an overrun state, so even though the continuous belt 7 is running as the crankshaft 2 rotates, the rotating drive shaft 5 of the starter motor 4 does not rotate. Therefore, the starter motor 4 does not resist against the operation of the engine 1, and the durability of the starter motor 4 is not impaired.

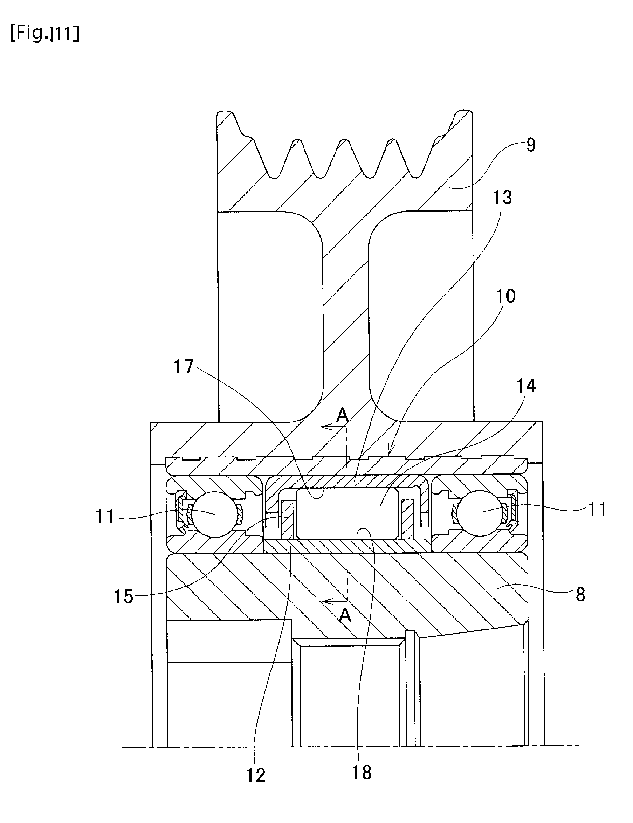

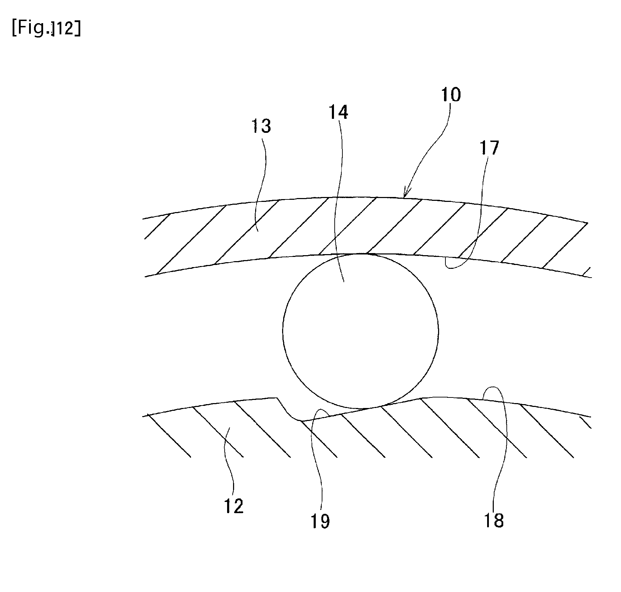

FIG. 11 and FIG. 12 illustrate an example of a pulley apparatus that is equipped with a one-way clutch as disclosed in JP 2004-144170 (A). This pulley apparatus comprises a sleeve 8 and a pulley 9 that are arranged concentric with each other. A roller clutch 10 and a pair of support bearings 11 are provided between the outer-circumferential surface of the sleeve 8 and the inner-circumferential surface of the pulley 9.

The sleeve 8 is shaped entirely into a cylindrical shape, and is fitted and fastened around the outside of the rotating drive shaft 5 so as to be able to rotate together with the rotating drive shaft 5. On the other hand, a continuous belt 7 is placed on the pulley 9. The roller clutch 10 is placed in the middle section in the axial direction in a cylindrical shaped space that exists between the inner-circumferential surface of the pulley 9 and the outer-circumferential surface of the sleeve 8, and the pair of support bearings 11 are placed in the both end sections in the axial direction of this cylindrical shaped space and at positions on both sides in the axial direction of the roller clutch 10. The pair of support bearings 11 makes relative rotation between the pulley 9 and sleeve 8 possible, while at the same time support radial loads that are applied to the pulley 9.

The roller clutch 10 is able to transmit a rotational force between the pulley 9 and sleeve 8 only when relative rotation in a specified direction between the pulley 9 and sleeve 8 occurs. The roller clutch 10 comprises a clutch inner ring 12 and a clutch outer ring 13 that are both made using steel plate, a clutch retainer 15 made of synthetic resin, and springs as elastic members (not illustrated in the figure). The clutch inner ring 12 is fitted and fastened around the outer-circumferential surface of the middle section of the sleeve 8 with an interference fit, and the clutch outer ring 13 is fitted and fastened around the inner-circumferential surface of the middle section of the pulley 9 with an interference fit. The inner-circumferential surface of the clutch outer ring 13 is a cylindrical surface 17; however, the outer-circumferential surface of the clutch inner ring 12 is a cam surface 18. In other words, plural concave sections 19 called ramp sections that respectively extend in the axial direction of the clutch inner ring 12 are formed on the outer-circumferential surface of the clutch inner ring 12 so as to be uniformly spaced in the circumferential direction.

Plural rollers 14, and a clutch retainer 15 that holds the rollers 14 so as to be able to roll and move a little in the circumferential direction are placed in the cylindrical space between the cam surface 18 and the cylindrical surface 17. The rollers 14 are placed at locations that are aligned with the concave sections 19. Moreover, the clutch retainer 15 is such that by the inner-circumferential edge section engaging with part of the cam surface 18, relative rotation with respect to the clutch inner ring 12 is prevented, and the clutch retainer 15 rotates in synchronization with the clutch inner ring 12. Furthermore, springs 16 are placed between the clutch retainer 15 and the rollers 14, and the rollers 14 are pressed in the same direction in the circumferential direction toward the side where the bottom surface of the concave sections 19 is shallow (right direction in FIG. 12).

In this kind of roller clutch 10, when the clutch inner ring 12 rotates in the left direction in FIG. 12 with respect to the clutch outer ring 13, the rollers 14, as illustrated in FIG. 12, bite in between the cylindrical surface 17 and the bottom surface of the concave sections 19 of the cam surface 18. As a result, rotational force is transmitted between the clutch outer ring 13 and the clutch inner ring 12, and the clutch outer ring 13 and clutch inner ring 12 rotate together. This state is called the locked state. On the other hand, when the clutch inner ring 12 rotates in the right direction in FIG. 12 with respect to the clutch outer ring 13, the rollers 14 move against the elastic force of the springs 16 into the portions where the bottom surface of the concave sections is deep, and the surface pressure at the areas of contact between the rolling surfaces of the rollers 14 and the cylindrical surface 17 decreases. As a result, rotational force is no longer transmitted between the clutch outer ring 13 and the clutch inner ring 12, and there is relative rotation between the clutch outer ring 13 and the clutch inner ring 12. This state is called the overrun state.

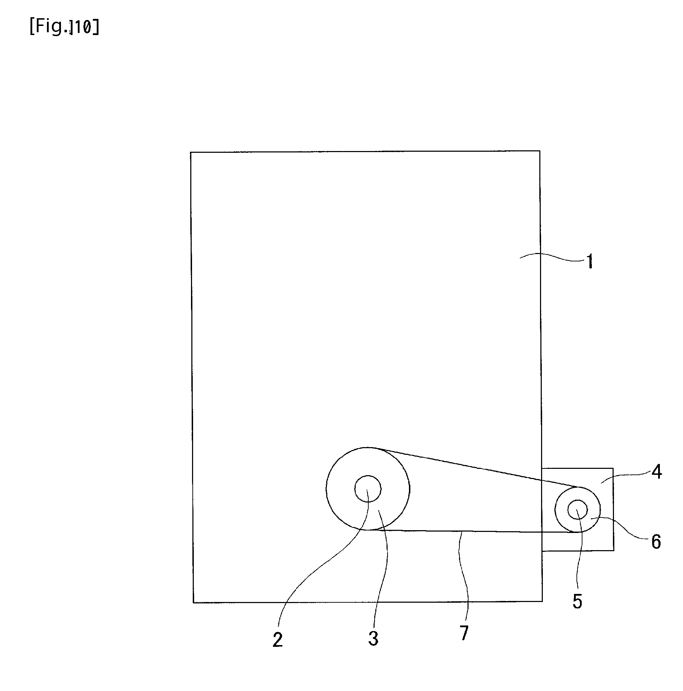

By using this kind of pulley apparatus equipped with a roller clutch as the drive pulley 6 of a starter for an idling-stop vehicle illustrated in FIG. 10, when the engine is started, electricity flowing to the starter motor 4 makes it possible to rotate and drive the crankshaft 2, however, after the engine 1 is started, and regardless that the continuous belt 7 is running together with the rotation of the crankshaft 2, the starter motor 4 does not resist against the operation of the engine 1.

In the construction disclosed in JP 2004-144170 (A), the roller clutch 10 and pair of support bearings 11 are separate bodies, and when assembling the pulley apparatus equipped with roller clutch, it is necessary to assemble three units between the outer-circumferential surface of the sleeve 8 and the inner-circumferential surface of the pulley 9. Therefore, the work of managing parts and the work of assembling the pulley apparatus equipped with roller clutch become troublesome. Such conditions are the same even in the case of assembling a roller clutch equipped with support bearings in various auxiliary machines for an automobile such as an alternator, or in the power transmission section of various machinery such as a transmission oil pump.

On the other hand, JP 3,657,330 (B) discloses construction in which, as illustrated in FIG. 13 to FIG. 15, a common outer ring 20 and inner ring 21 are used for the roller clutch 10a and pair of support bearings 11a, 11b. Both ends of the outer-circumferential surface of the inner ring 21 is the bearing inner-ring raceway for the support bearings 11a, 11b, and the middle section of the outer-circumferential surface of the inner ring 21 is the cam surface 18a where plural concave sections 19 are provided. Locking grooves 22 are provided between concave sections 19 that are adjacent in the circumferential direction, and the end sections on the inner-diameter side of column sections 23 of the clutch retainer 15a engage in these locking grooves 22. With this construction, the roller clutch 10a and the pair of support bearings 11a, 11b can be handled as one non-separable unit, so it is possible to simplify the work of managing parts and the work of assembly.

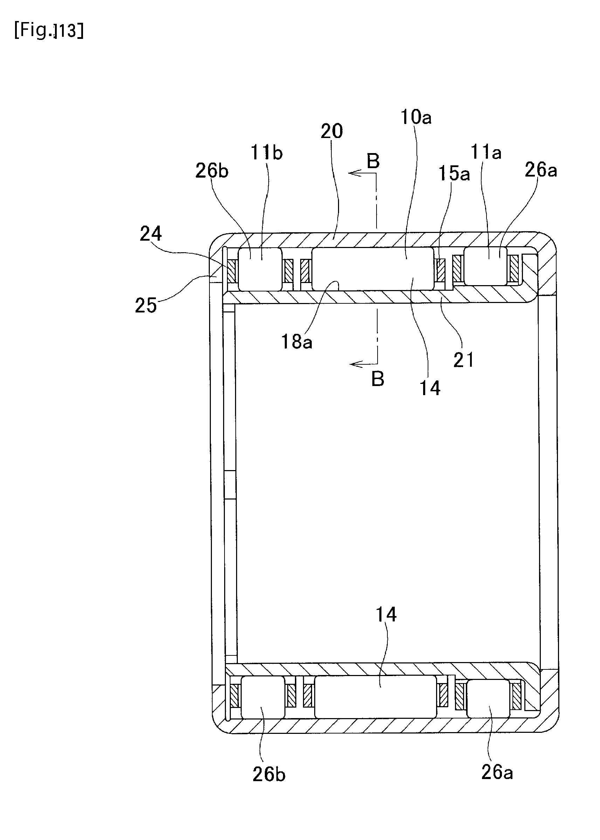

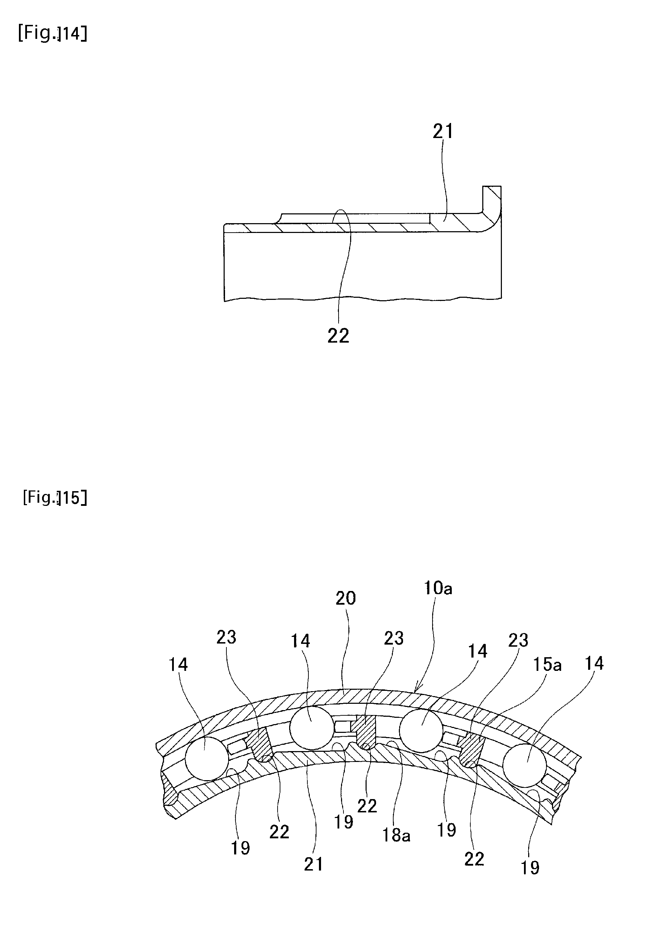

However, with this construction, by making the inner ring 21 a single body, the following points that need improvement newly occurred. First, (1) it is not possible to sufficiently prevent displacement in the axial direction of the clutch retainer 15a. In other words, displacement of the clutch retainer 15a in the right direction in FIG. 13 is prevented by the engagement between the column sections 23 and the back-end section (right end section in FIG. 14) of the locking grooves 22, however, displacement of the clutch retainer 15a in the left direction in FIG. 13 is not prevented. When the clutch retainer 15a moves in this direction, a bearing retainer 24 of the support bearing 11b becomes sandwiched between the clutch retainer 15a and an inward-facing flange section 25 that is formed on the end section of the outer ring 20. In this state, not only does the resistance to rotation of the support bearing 11b and the resistance to rotation of the roller clutch equipped with support bearings in the overrun state become large, there is a possibility that the durability will decrease due to the generation of heat.

Moreover, (2) not only does the thickness of the portion on the tip end section (left end section in FIG. 13) of the inner ring 21 that functions as the inner ring of the support bearing 11b become small, and maintaining the strength of the portion that functions as the inner ring become difficult, maintaining the precision of the shape also becomes difficult. As a result, maintaining the reliability and durability of the support bearing 11b becomes difficult.

Furthermore, (3) it is necessary to make the diameters of the rollers 26a, 26b between the support bearings 11a, 11b different. In other words, it is necessary to make the diameter of the rollers 26b of the support bearing 11b on the tip-end side larger than the diameter of the rollers 26a of the support bearing 11a on the base-end side by the amount that the thickness of the tip-end section of the inner ring 21 is smaller than the thickness of the base-end section (right end section in FIG. 13) of the inner ring 21. When the specifications for the pair of support bearings 11a, 11b that are provided on both sides in the axial direction of the roller clutch 10a differ in this way, the rotational balance of the roller clutch with support bearings becomes bad, and there is a possibility that vibration or noise will occur during operation, or that the durability will become impaired.

### [Related Literature]

### [Patent Literature]

- [Patent Literature 1]: JP 2004-144170 (A)
- [Patent Literature 2]: JP 3,657,330 (B)

### SUMMARY OF INVENTION

### [Problem to be Solved by Invention]

In consideration of the situation described above, the object of the present invention is to provide a low-cost roller clutch equipped with support bearings for which interference between member can be surely prevented, and that has excellent transmission performance and durability.

### [Means for Solving Problems]

The roller clutch equipped with support bearings of the present invention comprises an outer-diameter side cylindrical member, an inner-diameter cylindrical member, a cam surface, a cylindrical surface, plural rollers, a clutch retainer, plural springs, a first support bearing and a second support bearing.

The outer-diameter side cylindrical member is fitted and fastened with an interference fit inside an outer-diameter side power-transmission member such as a pulley, gear or the like, or a support holes that is provided in an outer-diameter side support member such as a housing. The inner-diameter side cylindrical member is arranged on the inner-diameter side of the outer-diameter side cylindrical member so as to be concentric with the outer-diameter side cylindrical member, and is fitted and fastened with an interference fit around the outside of an inner-diameter side power-transmission member such as a rotating shaft, or an inner-diameter side support member such as a support shaft. The cam surface is formed on one circumferential surface of the inner-circumferential surface of the outer-diameter side cylindrical member and the outer-circumferential surface of the inner-diameter side cylindrical member, with plural concave sections that extend in the axial direction being intermittently provided in the circumferential direction. The cylindrical surface is formed on the other circumferential surface of the inner-circumferential surface of the outer-diameter side cylindrical member and the outer-circumferential surface of the inner-diameter side cylindrical member.

The plural rollers are arranged inside a cylindrical space between the cam surface and the cylindrical surface. The clutch retainer is arranged inside the cylindrical space and holds the rollers so as to be able to roll and so as to be able to move in the circumferential direction. The plural springs are provided between the clutch retainer and the rollers, and press the rollers in the same circumferential direction toward the portions of the cylindrical space having a narrow width in the radial direction.

The first support bearing and the second support bearing are provided at positions on both sides in the axial direction of the clutch retainer; and each comprises: an outer ring; a bearing outer-ring raceway that is formed around the inner-circumferential surface of the outer ring; an inner ring; a bearing inner-ring raceway that is formed around the outer-circumferential surface of the inner ring; and plural rolling bodies that are arranged between the bearing outer-ring raceway and the bearing inner-ring raceway.

Protrusions are formed at portions on both end sections in the axial direction of the clutch retainer that are aligned with at least part of the concave sections, and by the protrusions engaging with part of the concave sections, relative rotation of the clutch retainer with respect to the outer-diameter side cylindrical member or inner-diameter side cylindrical member on which the cam surface is formed is prevented.

Particularly, in the roller clutch equipped with support bearings of the present invention, a first race member that is provided on the same side as the outer-diameter side cylindrical member or inner-diameter side cylindrical member where the cam surface is provided in the radial direction and that is one of the outer ring and inner ring of the first support bearing is a single body with the outer-diameter side cylindrical member or inner-diameter side cylindrical member where the cam surface is provided. The outer-circumferential surface or inner-circumferential surface on the same side as the cam surface of the first race member forms a first raceway surface around the entire circumference.

A second race member that is provided on the same side as an outer-diameter side cylindrical member or inner-diameter side cylindrical member where the cam surface is provided in the radial direction and that is one of the outer ring and inner ring of the second support bearing is a separate body from the outer-diameter side cylindrical member or inner-diameter side cylindrical member where the cam surface is provided. Of the outer-circumferential surface or inner-circumferential surface of the second race member, the outer-circumferential surface or inner-circumferential surface on the same side as the first raceway surface and the cam surface forms a second raceway surface around the entire circumference.

The concave sections of the cam surface are provided in a state so as to be more recessed in the radial direction than the first raceway surface and second raceway surface.

The protrusions that are formed on both end sections in the axial direction of the clutch retainer regulate displacement in the axial direction of the clutch retainer by engaging with the back-end sections of the concave sections on the first race member side and with the end edge of the second race member.

When embodying the roller clutch equipped with support bearings of the present invention, more specifically the first support bearing and second support bearing are cylindrical roller bearings. Moreover, the outer-diameter side cylindrical member is the outer-ring member. The first inward-facing flange section and the second inward-facing flange section that are bent inward in the radial direction are formed on both end sections in the axial direction of the outer-ring member. Both end sections of a single cylindrical inner-circumferential surface that exists between the first inward-facing flange section and second inward-facing flange section form a first bearing outer-ring raceway and second bearing outer-ring raceway, and the middle section of the inner-circumferential surface forms a clutch outer-ring raceway.

The inner-diameter side cylindrical member is the clutch inner-ring member, and the outer-circumferential surface thereof is the cam surface. The clutch inner-ring member is a single body with the first race member. The concave sections of the cam surface are open on the end edge on the opposite side from the first race member. The first outward-facing flange section that is bent outward in the radial direction is formed on the end section of the first race member that is on the opposite side from the clutch inner-ring member.

The second race member has a thickness that is greater than the thickness of the portions of the clutch inner-ring member that correspond to the concave sections. The outer-circumferential surface of the second race member forms a cylindrical second bearing inner-ring raceway that is a second raceway surface; and a second outward-facing flange section that is bent outward in the radial direction is formed on the end section on the opposite side from the clutch inner-ring member.

The clutch retainer comprises: a pair of circular ring-shaped rim sections that are arranged so as to be separated in the axial direction and so as to be concentric with each other; and plural column sections that are provided between the pair of rim sections and are uniformly spaced in the circumferential direction. The protrusions are formed in the portions of the inner-circumferential surfaces of the pair of rim sections that are provided on both end sections in the axial direction of the clutch retainer that are aligned with the concave sections, and by the protrusions engaging with the concave sections, rotation of the clutch retainer with respect to the clutch inner-ring member is prevented.

Furthermore, the first outward-facing flange section and second outward-facing flange section are arranged between the first inward-facing flange section and the second inward-facing flange section, which prevents separation of the second race member from the clutch inner-ring member. In this state, the protrusions that are provided on the inner-circumferential surface of the pair of rim sections are held on both sides in the axial direction between the back-end sections of the concave sections and the end edge of the second race member, which regulates displacement in the axial direction of the clutch retainer with respect to the clutch inner-ring member.

### [Effect of Invention]

The roller clutch equipped with support bearings of the present invention can be handled as a non-separable single unit, so it is possible to simplify the work of managing parts and assembly. Moreover, it is possible to prevent interference between the component members, so excellent transmission performance and durability are maintained.

### BRIEF DESCRIPTION OF DRAWINGS

FIG. 1 is a half cross-sectional view of an example of an embodiment of the present invention, and illustrates a state with part of the parts omitted.
FIG. 2 is a perspective view of the example of an embodiment of the present invention, and illustrates the assembled state with the outer ring omitted as seen from the side were a separate inner ring is installed.
FIG. 3 is a perspective view of the example of an embodiment of the present invention as seen from the opposite side in FIG. 2.
FIG. 4 is an orthographic projection of the example of an embodiment of the present invention as seen from the outside in the radial direction.
FIG. 5 is a perspective view of the example of an embodiment of the present invention as seen in the same direction as in FIG. 2, and illustrates a state in which the separate inner ring has been separated.
FIG. 6 is an exploded perspective view of the example of an embodiment of the present invention, and illustrates a state during assembly.
FIG. 7 is an exploded perspective view of the example of an embodiment of the present invention, and illustrates the state before assembling the clutch retainer, rollers, and springs.
FIG. 8 is a perspective view of the example of an embodiment of the present invention, and illustrates an integrated clutch inner ring member and first race member.
FIG. 9 is a perspective view of the example of an embodiment of the present invention, and illustrates a clutch retainer thereof.
FIG. 10 is a front view of a starter of an idling-stop vehicle.
FIG. 11 is a half cross-sectional view of a pulley apparatus containing a roller clutch equipped with support bearings.
FIG. 12 is a cross-sectional view of section A-A in FIG. 11 with part omitted.
FIG. 13 is a cross-sectional view that illustrates another example of conventional construction of a roller clutch equipped with support bearings.
FIG. 14 is a partial cross-sectional view that illustrates the inner ring that has been removed from the construction illustrated in FIG. 13.
FIG. 15 is a cross-sectional view of section B-B in FIG. 13.

### MODES FOR CARRYING OUT INVENTION

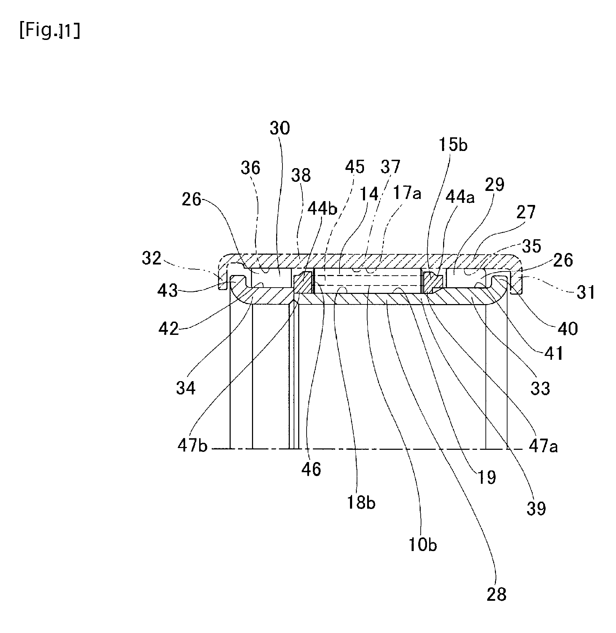

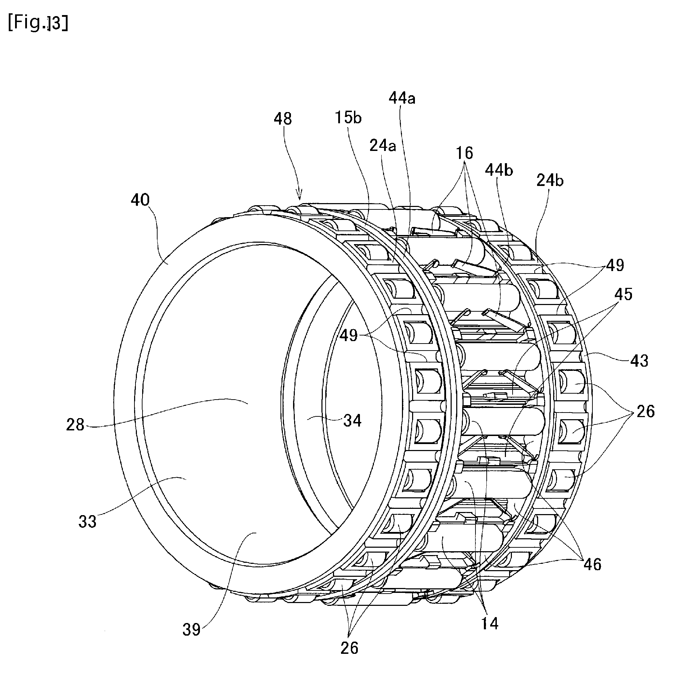

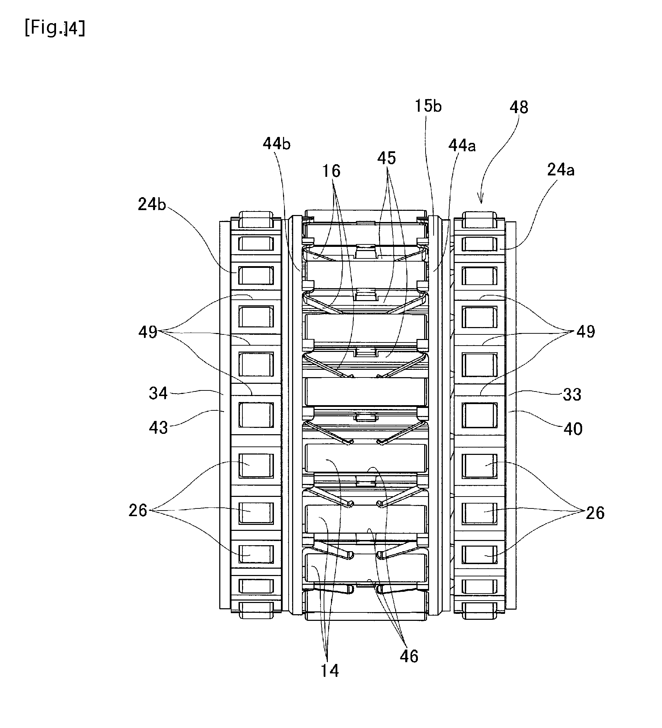

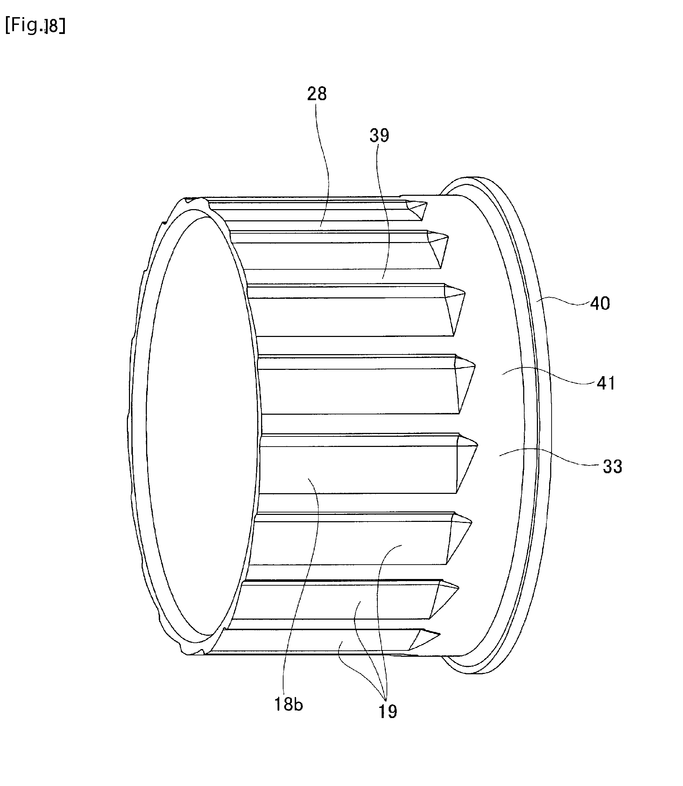

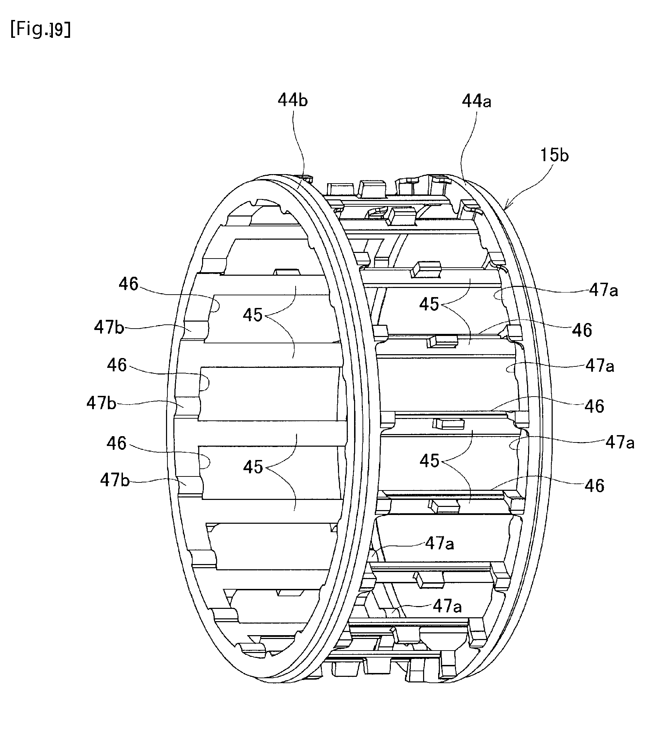

FIG. 1 to FIG. 9 illustrate an example of an embodiment of the present invention. The roller clutch equipped with support bearings of this example is constructed by providing the first support bearing 29 and the second support bearing 30 on both sides of a roller clutch 10b. In order for this, the roller clutch equipped with support bearings of this example comprises an outer-ring member 27 that is a cylindrical member on the outer-diameter side, a clutch inner ring member 28 that is a cylindrical member on the inner-diameter side, a first race member 33, a second race member 34, a cam surface 18b, a cylindrical surface 17a, plural rollers 14 and a clutch retainer 15b.

The outer-ring member 27 is formed by bending a hard metal plate such as a bearing steel plate, a case hardening steel plate or the like, and fitted and fastened with an interference fit inside an outer-diameter side transmission member such as a pulley, gear or the like, or inside a support hole that is provided in an outer-diameter side support member such as a housing. A first inward-facing flange section 31 and a second inward-facing flange section 32 that are bent inward in the radial direction are formed on both end sections in the axial direction of the outer-ring member 27. The first inward-facing flange section 31 is formed before assembly of the roller clutch equipped with support bearings, and has a thickness that is nearly equivalent with that of cylindrical outer-diameter side main portion 38 of the outer-ring member 27. On the other hand, the second inward-facing flange section 32 is formed after the components of the roller clutch equipped with support bearings have been assembled on the inner-diameter side of the outer-ring member 27, and the thickness is thinner than that of the outer-diameter side main portion 38. The cylindrical surface 17a is a simple cylindrical inner-circumferential surface that exists between the first inward-facing flange section 31 and second inward-facing flange section 32, with a first bearing outer-ring raceway 35 and a second bearing outer-ring raceway 36 being formed on both end sections of the cylindrical surface 17a, and a clutch outer-ring raceway 37 being formed in the middle section of the cylindrical surface 17a.

The clutch inner-ring member 28 and the first race member 33 and second race member 34 are arranged on the inner-diameter side of the outer-ring member 27 so as to be concentric with the outer-ring member 27, and fitted and fastened with an interference fit around an inner-diameter side power-transmission member such as a rotating shaft, or around an inner-diameter side support member such as a support shaft. The clutch-inner ring member 28 and first race member 33 are integrated into a single body. The clutch inner-ring member 28 and the first race member 33 are obtained by bending a single hard-metal plate, and comprises a cylindrical inner-diameter side main portion 39 and a first outward-facing flange section 40 that is formed by bending the base-end section of the cylindrical inner-diameter side main portion 39 outward in the radial direction. Moreover, a first bearing inner-ring raceway 41 is formed around the portion near the base end of the outer-circumferential surface of the inner-diameter side main portion 39. In other words, the portion near the base end of the outer-circumferential surface of the inner-diameter side main portion 39 (outer-circumferential surface of the first race member 33) becomes a first raceway surface. Plural concave sections 19 that extend in the axial direction are uniformly spaced and intermittently formed in the circumferential direction around the outer-circumferential surface of the inner-diameter side main portion 39 from the middle section to the portion near the tip end to form a cam surface 8b that is an uneven surface in the circumferential direction. The portions of the cam surface 18b that are between the concave sections 19 exist on the same cylindrical surface as the first bearing inner-ring raceway 41, and the concave sections 19 are provided so as to be further recessed in the radial direction than the portions (first raceway surface) near the base end of the outer-circumferential surface of the inner-diameter side main portion 39 where the first bearing inner-ring raceway 41 is formed. The end sections of the concave sections 19 are open on the tip-end surface of the inner-diameter side main portion 39.

The second race member 34 is separate from the clutch inner-ring member 28 and first race member 33. The second race member 34, similar to the clutch inner-ring member 28 and first race member 33, is formed by bending hard metal plate such as a bearing steel plate, case hardened steel plate or the like. A second bearing inner-ring raceway 42 is formed around the cylindrical outer-circumferential surface of the second race member 34, and a second outward-facing flange section 43 that is bent outward in the radial direction is formed around the end section on the opposite side from the clutch inner-ring member 28. In other words, the outer-circumferential surface of the second race member 34 becomes a second raceway surface. The thickness of the portion of the second race member 34 where the second bearing inner-ring raceway 42 is formed is the same as the thickness of the portion of the first race member 33 where the first bearing inner-ring raceway 41 is formed. Moreover, the outer diameters of the first bearing inner-ring raceway 41 and the second bearing inner-ring raceway 42 are the same as each other. Therefore, when the clutch inner-ring member 28 and first race member 33 and the second race member 34 are assembled, and the tip end edge of the clutch inner-ring member 28 and the tip end edge of the second race member 34 butt against each other, the tip end edge of the second race member 34 closes the openings on the tip end of the concave sections 19 that are provided in a recessed state from the outer-circumferential surface (second raceway surface) where the second bearing inner-ring raceway 42 is formed.

The plural rollers 14 are held in the clutch retainer 15b and are arranged inside the cylindrical space between the cam surface 18 and the clutch outer-ring raceway 37. The clutch retainer 15b is formed by injection molding of synthetic resin, and is formed into a cylindrical shape similar to a cage retainer of a radial needle bearing. In other words, plural column sections 45 that are uniformly spaced and parallel to each other are provided between a pair of ring-shaped rim sections 44a, 44b that are separated in the axial direction and arranged so as to be concentric with each other. The portions that are surrounded on four sides by the rim sections 44a, 44b and column sections 45 that are adjacent in the circumferential direction form pockets 46, and rollers 14 are placed inside these pockets 46 so as to be able to roll and displace a little in the circumferential direction.

Protrusions 47a, 47b are formed in portions of the inner-circumferential surface of the rim sections 44a, 44b that are aligned with the concave sections 19, and these protrusions 47a, 47b engage with the concave sections 19, which prevents rotation of the clutch retainer 15b with respect to the clutch inner-ring member 28. Moreover, one side of the protrusions 47a engage with the back-end sections (tip-end surface of the first race member 33) on the first race member 33 side of the concave sections 19, which prevents displacement of the clutch retainer 15b toward the first outward-facing flange section 40 side of the clutch retainer 15b. Furthermore, the other side of protrusions 47b engages with the tip-end edge (tip-end surface) of the second race member 34, which prevents displacement of the clutch retainer 15b toward the second outward-facing flange section 43 side. Therefore, in the assembled state of the roller clutch equipped with support bearings of this example, there is no large displacement of the clutch retainer 15b in either axial direction from the state illustrated in FIG. 1 to the extent of sandwiching the bearing retainers 24a, 24b, for example. In this example, the protrusions 47a, 47b are provided in portions that are aligned with all of the concave sections 19, however, these protrusions 47a, 47b could also be provided in portions that are aligned with part of the concave sections 19, for example two to four locations in the circumferential direction, or in portions that are aligned with half of the concave sections 19 in an alternating manner.

Springs 16 that are formed by bending elastic metal plate are placed between the rollers 14 and the column sections 45, and these springs 16 press the rollers 14 in the same circumferential direction. In other words, when the rollers 14 are assembled together with the clutch retainer 15b in the annular space that exists between the cam surface 18b and clutch outer-ring raceway 37, the rollers 14 are elastically pressed toward the side of the annular space that has a narrow width in the radial direction and that is separated from the concave sections 19.

Furthermore, the first support bearing 29 and second support bearing 30 are arranged in positions located on both sides in the axial direction of the clutch retainer 15b. The first support bearing 29 comprises: an end section on one side of the cylindrical surface 17a of the outer-ring member 27 that functions as an outer ring; a first bearing outer-ring raceway 35; a first race member 33 that functions as an inner ring; a first bearing inner-ring raceway 41; and plural rollers 26 that are located between the first bearing outer-ring raceway 35 and first bearing inner-ring raceway 41 and held by a bearing retainer 24a so as to be able to roll freely. The second support bearing 30 comprises: an end section on the other side of the cylindrical surface 17a of the outer-ring member 27 that functions as an outer ring; a second bearing outer-ring raceway 36; a second race member 34 that functions as an inner ring; a second bearing inner-ring raceway 42; and plural rollers 26 that are located between the second bearing outer-ring raceway 36 and second bearing inner-ring raceway 42 and held by a bearing retainer 24b so as to be able to roll freely. Concave grooves 49 are provided on the outer circumferential surfaces of the column sections of the bearing retainers 24a, 24b so as to pass in the axial direction through the column sections, making it possible for lubricant for lubricating the roller clutch equipped with support bearings of this example to flow easily. In this example, cylindrical roller bearings are used as the first support bearing 29 and second support bearing 30, however, depending on the use, there are cases in which ball bearings that use balls as the rolling bodies are used, and the present invention can be applied in that case as well.

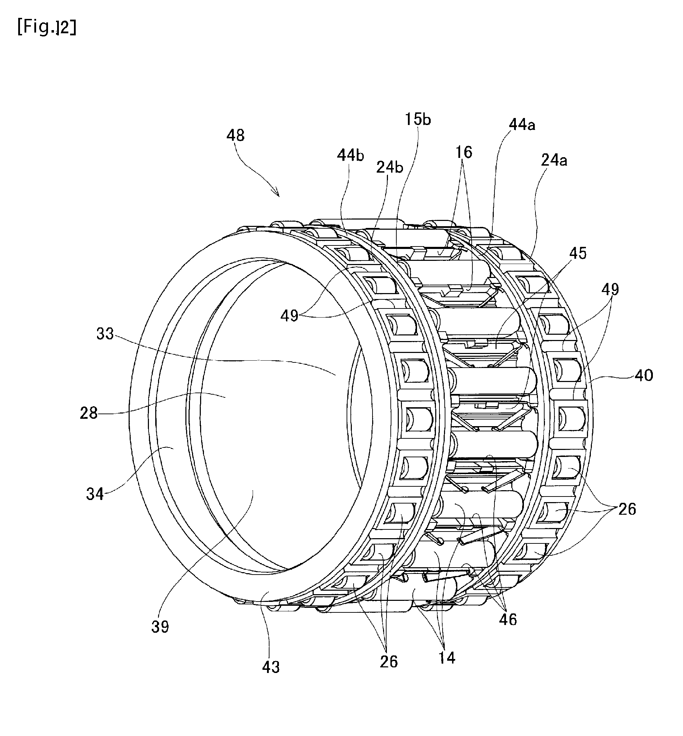

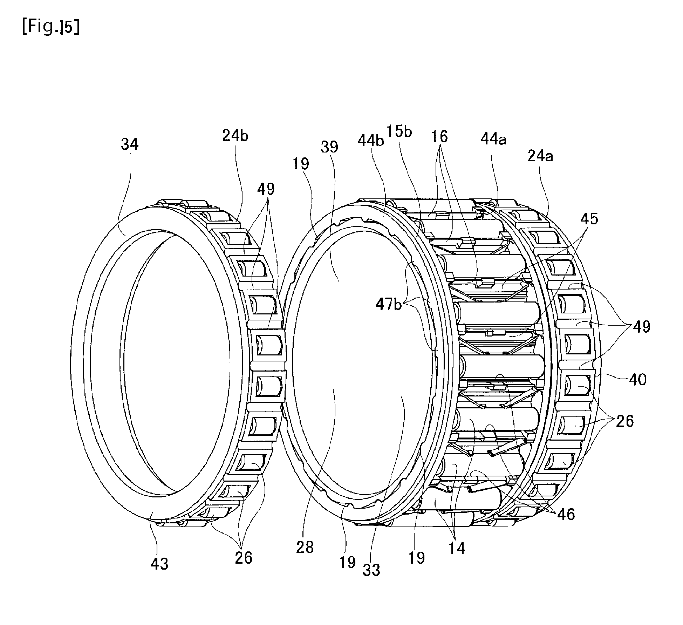

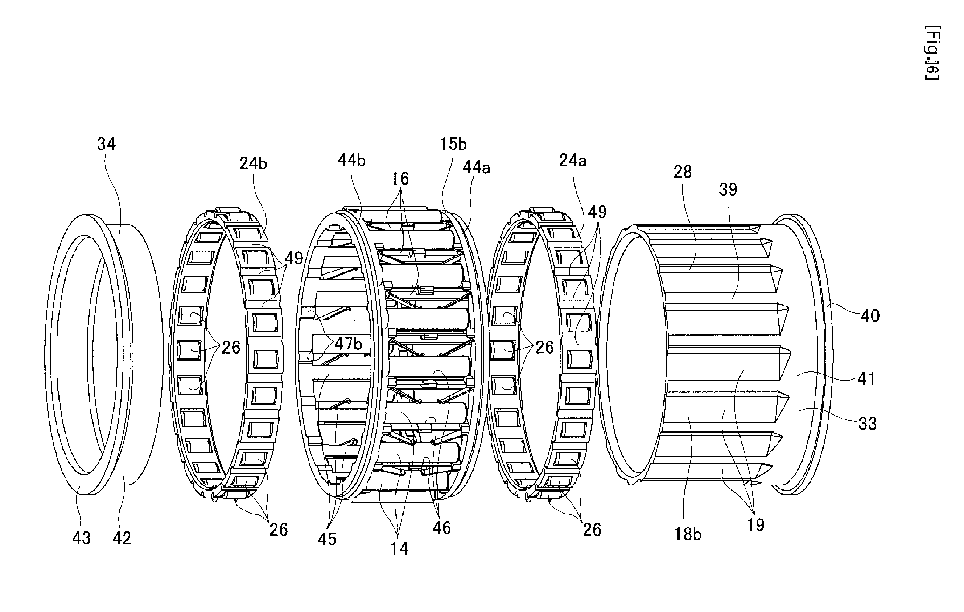

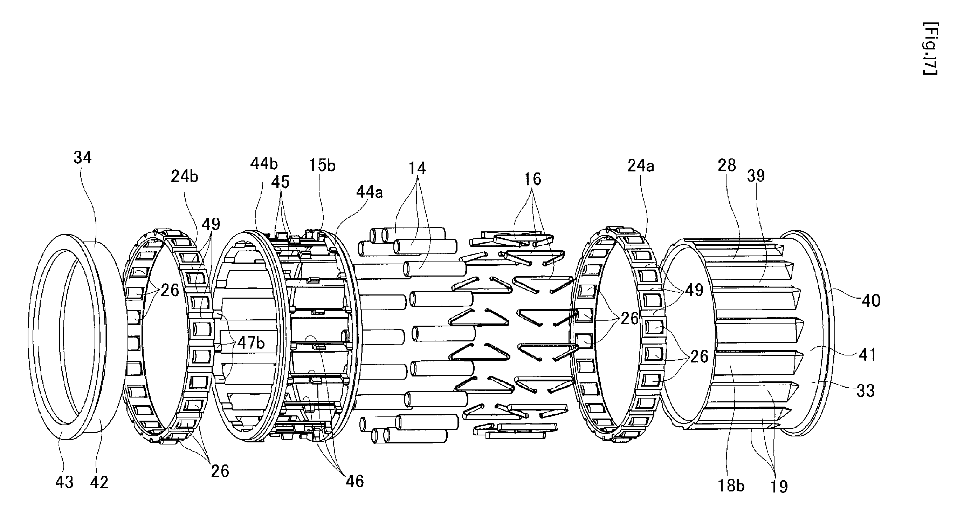

The clutch inner-ring member 28 and second race member 34, together with other component members are assembled from the state illustrated in FIG. 7, going through the state illustrated in FIG. 6 and illustrated in FIG. 5, to the state illustrated in FIG. 2 to FIG. 4 on the inner-diameter side of the outer-ring member 27. In other words, with the component members of the roller clutch 10b, the first support bearing 29 and second support bearing 30 assembled around the clutch inner-ring member 28 and the second race member 34, the tip-end edges of the clutch inner-ring member and second race member 34 butt against each other to form a sub-assembly unit 48 as illustrated in FIG. 2 to FIG 4. Then, this sub-assembly unit 48 is assembled on the inner-diameter side of the outer-ring member 27 as illustrated in FIG. 1. Up to this stage during the assembly work, the thin second inward-facing flange section 32 is not yet formed. After the sub-assembly unit 48 has been inserted into the inner-diameter side of the outer-ring member 27, the second inward-facing flange section 32 is formed by bending. In this state, with the first outward-facing flange section 40 and second outward-facing flange section 43 arranged on the inside in the axial direction of the first inward-facing flange section 31 and second inward-facing flange section 32, preferably fitted on the inside in the axial direction, the second race member 34 and clutch inner-ring member 28 are prevented from separation. Moreover, displacement in the axial direction of the clutch retainer 15b with respect to the clutch inner-ring member 28 is regulated.

With the roller clutch equipped with support bearings of this example, the roller clutch 10b, the first support bearing 29 and the second support bearing 30 can be handled as a single non-separable unit. Therefore, it is possible to simplify the work of managing and assembling parts of various kinds of machinery, such as the starter of an engine, in which a roller clutch equipped with support bearings is assembled in the power-transmission section.

Moreover, in the roller clutch equipped with support bearings of this example, the clutch retainer 15b is prevented from displacing in the axial direction. Therefore, the space between the rim sections 44a, 44b that are provided on both end sections of the clutch retainer 15b and the first inward-facing flange section 31 and second inward-facing flange section 32 that are provided on both end sections of the outer-ring member 27 does not becomes smaller than the width in the axial direction of either of the bearing retainers 24a, 24b. Consequently, for both the first support bearing 29 and second support bearing 30, the bearing retainers 24a, 24b do not become sandwiched between a pair of surfaces, or in other words, between the outside surface of the rim section 44a and inside surface of the first outward-facing flange section 40, or between the outside surface of the rim section 44b and the inside surface of the second outward-facing flange section 43. As a result, the resistance to rotation of the roller clutch equipped with support bearings in the overrun state is kept low, heat is suppressed, and durability is maintained.

Furthermore, for the first support bearing 29 and the second support bearing 30, the thickness of the inner raceway ring and the outer raceway ring is sufficiently maintained, and processing thereof is easy. In other words, in regards to the common outer-ring member 27, except for the portion where the second inward-facing flange section 32 is formed, sufficient thickness is maintained as the outer ring. Moreover, both the first race member 33 and the second race member 34 have a sufficient thickness dimension regardless of the existence of concave sections 19 for forming the cam surface 18b. As a result, the strength and shape precision of the inner raceway ring and outer raceway ring are maintained, and the reliability and durability of the first support bearing 29 and the second support bearing 30 are sufficiently maintained.

In addition, it is possible to make the specifications for both the first support bearing 29 and the second support bearing 30 the same. In other words, a common outer-ring member 27 is used between the first support bearing 29 and second support bearing 30, so the inner diameter along the axial direction can be fixed, and the outer diameters of the first race member 33 and the second race member 34 can be made to be the same as each other. Moreover, in regards to the dimensions in the axial direction of the first race member 33 and second race member 34 as well, the dimensions are made coincident without particularly limited. Therefore, the diameter and length in the axial direction, and the number of the rollers 26 of the first support bearing 29 and second support bearing 30 can be made to be the same between the first support bearing 29 and second support bearing 30. As a result, the rotational balance of the roller clutch equipped with support bearings can be improved, it becomes difficult for vibration and noise to occur during operation, and maintaining the durability thereof becomes easy.

In this example, construction is such that the cam surface 18b is taken to be the outer-circumferential surface of the clutch inner ring 12, and the inner-circumferential surface of the clutch outer ring 13 is taken to be a cylindrical surface. However, the roller clutch equipped with support bearings of the present invention can also be applied to a roller clutch in which the outer-circumferential surface of the clutch inner ring is taken to be a cylindrical surface, and the inner-circumferential surface of the clutch outer ring 13 is taken to be a cam surface.

### [Industrial Applicability]

The present invention is not limited to the power-transmission section of a starter for an idling-stop vehicle, and can be applied to the power-transmission section of various kinds of machinery including various kind of automobile auxiliary devices, transmission oil pumps and the like.

### [Explanation of Reference Numbers]

- 1: Engine
- 2: Crankshaft
- 3: Follower pulley
- 4: Starter motor
- 5: Rotating drive shaft
- 6: Drive pulley
- 7: Continuous belt
- 8: Sleeve
- 9: Pulley
- 10, 10a, 10b: Roller clutch
- 11, 11a, 11b: Support bearing
- 12: Clutch inner ring
- 13: Clutch outer ring
- 14: Roller
- 15, 15a, 15b: Clutch retainer
- 16: Spring
- 17, 17a: Cylindrical surface
- 18, 18a, 18b: Cam surface
- 19: Concave section
- 20: Outer ring
- 21: Inner ring
- 22: Locking groove
- 23: Column section
- 24, 24a, 24b: Bearing retainer
- 25: Inward-facing flange section
- 26, 26a, 26b: Roller
- 27: Outer-ring member
- 28: Clutch inner-ring member
- 29: First support bearing
- 30: Second support bearing
- 31: First inward-facing flange section
- 32: Second inward-facing flange section
- 33: First race member
- 34: Second race member
- 35: First bearing outer-ring raceway
- 36: Second bearing outer-ring raceway
- 37: Clutch outer-ring raceway
- 38: Outer-diameter side main portion
- 39: Inner-diameter side main portion
- 40: First outward-facing flange section
- 41: First bearing inner-ring raceway
- 42: Second bearing inner-ring raceway
- 43: Second outward-facing flange section
- 44a, 44b: Rim section
- 45: Column section
- 46: Pocket
- 47a, 47b: Protrusion
- 48: Sub-assembly unit
- 49: Concave groove

## Claims

1. A roller clutch equipped with support bearings, comprising:
an outer-diameter side cylindrical member;
an inner-diameter side cylindrical member arranged on an inner-diameter side of the outer-diameter side cylindrical member so as to be concentric with the outer-diameter side cylindrical member;
a cam surface formed on one circumferential surface of an inner-circumferential surface of the outer-diameter side cylindrical member and an outer-circumferential surface of the inner-diameter side cylindrical member, with plural concave sections extending in an axial direction of the roller clutch and being intermittently provided in a circumferential direction of the roller clutch;
a cylindrical surface formed on another circumferential surface of the inner-circumferential surface of the outer-diameter side cylindrical member and the outer-circumferential surface of the inner-diameter side cylindrical member;
plural rollers arranged inside a cylindrical space between the cam surface and the cylindrical surface;
a clutch retainer arranged inside the cylindrical space and holding the rollers so as to be able to roll and move in the circumferential direction;
plural springs provided between the clutch retainer and the rollers and pressing the rollers in the same circumferential direction toward portions of the cylindrical space having a narrow width in a radial direction of the roller clutch; and
a first support bearing and a second support bearing provided at positions on both sides of the clutch retainer in the axial direction,
the first support bearing and the second support bearing both comprising:
an outer ring;
a bearing outer-ring raceway formed around an inner-circumferential surface of the outer ring;
an inner ring;
a bearing inner-ring raceway formed around an outer-circumferential surface of the inner ring; and
plural rolling bodies arranged between the bearing outer-ring raceway and the bearing inner-ring raceway,
protrusions being formed at portions on both end sections of the clutch retainer in the axial direction that are aligned with at least part of the concave sections, and by the protrusions engaging with the part of the concave sections, relative rotation of the clutch retainer with respect to the outer-diameter side cylindrical member or inner-diameter side cylindrical member on which the cam surface is formed being prevented,
a first race member that is one of the outer ring and inner ring of the first support bearing and that is provided on the same side in the radial direction as the outer-diameter side cylindrical member or inner-diameter side cylindrical member where the cam surface being provided, being a single body with the outer-diameter side cylindrical member or inner-diameter side cylindrical member where the cam surface is provided, and the outer-circumferential surface or inner-circumferential surface on the same side as the cam surface of the first race member forming a first raceway surface around the entire circumference,
a second race member that is one of the outer ring and inner ring of the second support bearing and that is provided on the same side in the radial direction as the outer-diameter side cylindrical member or inner-diameter side cylindrical member where the cam surface is provided, being a separate body from the outer-diameter side cylindrical member or inner-diameter side cylindrical member where the cam surface is provided, and the outer-circumferential surface or inner-circumferential surface on the same side as the first raceway surface forms a second raceway surface around the entire circumference, and
the concave sections of the cam surface being provided in a state so as to be more recessed in the radial direction than the first raceway surface and second raceway surface, and the protrusions that are formed on both end sections in the axial direction of the clutch retainer engaging with back end sections of the concave sections on the first race member side and with an end edge of the second race member.

2. The roller clutch equipped with support bearings according to Claim 1, wherein
the outer-diameter side cylindrical member comprises an outer-ring member, in which a first inward-facing flange section and a second inward-facing flange section that are bent inward in the radial direction are formed on both end sections of the outer ring member in the axial direction, with both end sections of a single cylindrical inner-circumferential surface that exists between the first inward-facing flange section and the second inward-facing flange section forming a first bearing outer-ring raceway and a second bearing outer-ring raceway, and a middle section of the inner-circumferential surface forming a clutch outer-ring raceway;
the inner-diameter side cylindrical member comprises a clutch inner-ring member having an outer-circumferential surface which is the cam surface, the clutch inner-ring member being a single body with the first race member, and the concave sections of the cam surface being open on an end edge of the opposite side from the first race member, and a first outward-facing flange section that is bent outward in the radial direction being formed on an end section of the first race member that is on the opposite side from the clutch inner-ring member;
the second race member has a thickness that is greater than a thickness of portions of the clutch inner-ring member that correspond to the concave sections, the outer-circumferential surface of the second race member being a cylindrical second bearing inner-ring raceway that is the second raceway surface; and a second outward-facing flange section that is bent outward in the radial direction is formed on an end section on the opposite side from the clutch inner-ring member;
the clutch retainer comprises: a pair of circular ring-shaped rim sections that are arranged so as to be separated in the axial direction and so as to be concentric with each other; and plural column sections that are provided between the pair of rim sections and are uniformly spaced in the circumferential direction; with the protrusions being formed in the portions of the inner-circumferential surfaces of the pair of rim sections that are aligned with the concave sections; and
with the first outward-facing flange section and second outward-facing flange section being arranged between the first inward-facing flange section and the second inward-facing flange section, the protrusions that are provided on the inner-circumferential surface of the pair of rim sections are held on both sides in the axial direction between the back-end sections of the concave sections and the end edge of the second race member.

3. The roller clutch equipped with support bearings according to Claim 2, wherein the first support bearing and the second support bearing are cylindrical roller bearings.
